# EUROPEAN PATENT SPECIFICATION

(11) **EP 3 281 379 B1**
(45) Date of publication and mention of the grant of the patent: **09.01.2019**
(21) Application number: 16717023.2
(22) Date of filing: 31.03.2016
(51) Int. Cl.: H04L 29/06, H04L 29/08, G06F 21/60

(54) **SYSTEM AND METHOD FOR DELEGATION OF CLOUD COMPUTING PROCESSES**
SYSTEM UND VERFAHREN ZUR DELEGIERUNG VON CLOUD-COMPUTING-PROZESSEN
SYSTÈME ET PROCÉDÉ DE DÉLÉGATION DE PROCESSUS INFORMATIQUE EN NUAGE

(30) Priority: 10.04.2015 US 201562145959 P
(43) Date of publication of application: 14.02.2018
(73) Proprietor: PCMS Holdings, Inc., Wilmington, DE 19809 (US)
(72) Inventor: OLLIKAINEN, Ville J., 03400 Vihti (FI); KYLÄNPÄÄ, Markku, 00950 Helsinki (FI)
(74) Representative: AWA Sweden AB
(86) International application number: PCT/US2016/025337
(87) International publication number: WO 2016/164253

(56) References cited:
- US-A1- 2013 263 233
- US-A1- 2014 281 511
- US-A1- 2014 281 531
- US-A1- 2015 058 629

## Description

### TECHNICAL FIELD

The present disclosure relates generally to data processing. More specifically, the present disclosure relates to processing of encrypted data in the context of cloud based data storage.

### BACKGROUND

Cloud-based data services raise several privacy issues. Users must either trust the cloud service provider or use the cloud only as a storage for encrypted personal data. Many solutions, like fully homomorphic encryption, private cloud, or the use of isolated execution environment and attestation, have been proposed, but each suffers from its own disadvantages.

Data storage and services are increasingly moving to a cloud-based service format. Highspeed fixed and mobile network connections allow users to seamlessly upload and download data from cloud-based storage. Cloud-based applications like Google Docs also benefit users who wish to access documents from multiple different devices. Cloud-based storage further helps to prevent difficulties backing up data, as mobile devices are in danger of being broken, lost or stolen. Cloud services also provide scalability and fault tolerance advantages, as data storage volumes can be expanded when needed. Also, the application landscape has started to change, and in the future, it is predicted that many applications will run in containerized environment utilizing distributed application platforms.

At the same time, people also have more powerful devices. Current laptops, desktop computers, home servers, tablets, mobile phones, and other computing devices have a great deal of computing power. Many computing devices utilize multicore processors, and there are powerful co-processors that can also be utilized as computing platforms.

Although cloud-based services and storage provide multiple benefits, many people are not willing to share all of their information with cloud services due to trust issues. Uploading personal data and utilizing cloud-based services requires that the user trusts the cloud service provider and the operating procedures and security conventions that the provider is implementing. Attackers are able to utilize system features in a way that the designers have not anticipated. Sometimes security and ease of use are contradictory. Recent celebrity photo leaks have increased awareness that cloud services have privacy problems.

One potential solution to privacy issues is for each individual to encrypt his data using a unique key that is not shared with anyone else, not even with the cloud provider. Some systems implement such protections. One company implementing such protections, Nasuni, has listed security challenges of cloud storage:
- ***Data leakage*** - The best strategy is to assume from the start that the cloud vendor is compromised and send only encrypted files to the cloud.
- ***Cloud credentials*** - Access to a given pool of storage is based on credentials, and if you are lumped together with another set of customers and share the same credentials, there is a risk that one of them could obtain those credentials and access your data.
- ***Snooping*** - Data and metadata should be completely opaque on the wire and in the cloud. Nothing - no filenames, timestamps - should be decipherable once it leaves your premises.
- ***Key management*** - Key management should be so simple that users are not even aware of it: Encryption should be automatic.
- ***Performance*** - Security should not seriously impact performance.

Nasuni addresses these issues by utilizing OpenPGP encryption. However, this addresses only the provision of encrypted storage and does not solve privacy challenges of providing cloud-based software application services.

Instead of relying on an external cloud service provider, companies could set up their own private cloud and process all sensitive computing in their own premises. There are also hybrid solutions where cloud service providers offer dedicated servers for their customers to run only their services. This approach is appropriate for companies who can devote system administrators to maintain private cloud infrastructure. The private cloud can host a set of services that are needed to process company specific sensitive data. However, this approach is less convenient for individuals who want to protect their privacy, as it would be difficult for individuals to maintain their own private cloud and to acquire cloud service software.

Another alternative is a homomorphic encryption solution, which allows processing of encrypted data so that also the result stays encrypted. This allows users to upload their encrypted personal data to the cloud environment, where data mining software can process encrypted personal data and return processing results that are also encrypted. Users can decrypt the results and decide to share the results with others if they want. The cloud service provider has no access to decrypted content or result data and does not have to be fully trusted.

Being able to perform calculations on encrypted data is actually possible even in the RSA encryption algorithm. RSA is homomorphic with respect to multiplication, but not with respect to addition. For example, if an RSA-encrypted value is multiplied by 2 and the result is decrypted, the result is the same as the original unencrypted value multiplied by 2 (assuming the use of unpadded RSA notation). There are also homomorphic encryption schemes that are homomorphic with respect to addition. Encryption systems that are homomorphic with respect to both addition and multiplication are called fully homomorphic systems. Fully homomorphic encryption has been a very active research topic in recent years.

Unfortunately, fully homomorphic encryption is generally too slow for practical use. The size of the cipher text and the complexity of the encryption and decryption operations grow enormously with the number of operations to be performed.

Another security option is for cloud services to provide isolated execution environments similar to the ARM TrustZone that is typically available in ARM-based mobile devices. Low power consumption of ARM-based chips would make ARM architecture competitive against Intel-based architecture in large data centers, as cost of electricity and cooling requirements are major cost factors. ARM-based servers could also include ARM TrustZone making it possible to run trusted applications that are isolated from the rest of the system. However, the cloud and server field is generally dominated by Intel architecture.

There are reportedly plans by Intel to add protected container environment to Intel chips. In Workshop on Hardware and Architectural Support for Security and Privacy in June 2013, Intel announced that future Intel chips will include a concept called the Intel® Software Guard Extensions (Intel® SGX). Intel SGX reports the following eight objectives:
1. Allow application developers to protect sensitive data from unauthorized access or modification by rogue software running at higher privilege levels.
2. Enable applications to preserve the confidentiality and integrity of sensitive code and data without disrupting the ability of legitimate system software to schedule and manage the use of platform resources.
3. Enable consumers of computing devices to retain control of their platforms and the freedom to install and uninstall applications and services as they choose.
4. Enable the platform to measure an application's trusted code and produce a signed attestation, rooted in the processor that includes this measurement and other certification that the code has been correctly initialized in a trustable environment.
5. Enable the development of trusted applications using familiar tools and processes.
6. Allow the performance of trusted applications to scale with the capabilities of the underlying application processor.
7. Enable software vendors to deliver trusted applications and updates at their cadence, using the distribution channels of their choice.
8. Enable applications to define secure regions of code and data that maintain confidentiality even when an attacker has physical control of the platform and can conduct direct attacks on memory.

Intel SGX is a set of instructions and mechanisms for memory accesses added to future Intel Architecture processors. Intel SGX technology contains the concept of an enclave, a protected area in the application's address space that provides confidentiality and integrity even in the presence of privileged malware. Access to the enclave memory area from any software not resident in the enclave is prevented. The application can also request an enclave-specific and platform-specific key that it can use to protect keys and data that it wishes to store outside the enclave.

Although cloud servers typically do not have any trusted execution environment available, there are still ways to verify trustworthiness of the cloud service. This can be done in systems that support a trusted boot (or measured boot) concept and include a Hardware Security Module (HSM), typically a chip called the Trusted Platform Module (TPM). TPM includes a public/private RSA key pair. The private key cannot be extracted from the TPM but the public key can be certified. The TPM also includes a static set of operations like signing (TPM_Sign). TPM also includes couple of registers called Platform Configuration Registers (PCRs) that can store a 20 byte SHA1 hash value. PCRs can be read, but their value can only be modified by using a TPM Extend operation. The TPM_Extend operation concatenates the old PCR register value with a new hash value, calculates SHA1 hash of the concatenated bytes, and stores the result into the PCR register.

The remote attestation concept assumes that the platform measures each executable component that is invoked. Measurement is done by calculating an SHA1 hash value of the component. There is also a chain of verifications; for example, the boot loader should measure the kernel before loading and the kernel should measure userspace components before execution. Whenever a measurement is taken, a measurement log is appended to contain the measurement and the name of the executable file that was measured. The kernel will measure at least all native executables and shared libraries and will also keep track of these measurements so that components are typically measured only once after each boot. The remote site is assumed to know the system configuration and expected SHA1 hash values of system components. The remote site can send an attestation request (including random nonce). The system to be attested should then issue a TPM_Quote command (including received random nonce as a parameter) that provides the signed message containing PCR register values and the received nonce value. The signed message and measurement log is then returned to the remote site, which should check hash calculations and also that measured hash values have expected values. The remote is expected to know SHA1 hashes of all components to be measured.

The Linux kernel includes a component called IMA that can be used to create these measurements. If there is only one TPM chip in a hardware platform that is hosting several virtual machines TPM measurements from multiple virtual machine instances could be mixed, causing the result to be almost useless. Virtualized TPM (vTPM) has been proposed to solve this problem. Attestation is also an important component of Intel Trusted Execution Technology (TXT).

Attestation-based methods require that the user has full reference integrity metrics, security element must use certified key pair, and user is capable of replaying attestation log and comparing the results. This is possible for companies and large organizations but can be difficult for individuals.

PrivateCore is an example of a cloud technology provider that combines attestation and encryption. PrivateCore assumes that the only element that needs to be trusted in a system is the Central Processing Unit (CPU). PrivateCore uses AES encryption for RAM. PrivateCore uses a CPU-bound encryption approach similar to that of the TRESOR project, which has presented a Linux kernel patch that implements AES encryption and its key management solely using microprocessor registers instead of using RAM. TRESOR was meant for disk encryption and is potentially vulnerable to DMA-based attacks.

Although PrivateCore can address many problems related to sensitive data processing in public cloud, there are still issues. One of these is key management. Even if PrivateCore can keep the AES key inside the CPU, the key must be inserted somehow. There is also need to use remote attestation and to verify the measured configuration. Even though PrivateCore provides enhanced confidentiality protection, there are still trust issues, as users must rely on PrivateCore cloud infrastructure.

US 2014/281531 A1 describes a prior art solution for cloud processing of data stored in client data storage. The data is encrypted prior to uploading the encrypted data to a cloud service. A key server module is also uploaded and is executing in the cloud as a service. Results of the data processing operation are received from the cloud service and provided to the requesting computing device.

### SUMMARY

Embodiments herein relate to processing of encrypted data in the context of cloud-based data storage. More specifically, the division of encrypted data between a client and the cloud, such that the cloud does not access unencrypted versions of the encrypted data.

In one aspect, a method comprises receiving from a client device a request to perform a first operation, wherein the first operation includes at least a first function performed on a first set of data. The method further comprises determining whether the first set of data is encrypted. If the first set of data is encrypted, then the first set of data and an instruction to perform the first function are sent to the client device, wherein the instruction includes computer code for performing the first function; and first processed encrypted data representing an encrypted outcome of the function on the first set of data is received from the client device. If the first set of data is not encrypted: the first function is performed on the first set of data to generate first processed data.

In another aspect, a cloud service comprises at least one server having a processor and a non-transitory data storage medium, the medium storing instructions that are operative, when executed by the processor: to receive from a client device a request to perform a first operation, wherein the first operation includes at least a first function performed on a first set of data; and to determine whether the first set of data is encrypted. The instructions are operative, if the first set of data is encrypted: to send, to the client device, the first set of data and an instruction to perform the first function, wherein the instruction to perform the first function includes computer code for performing the first function; and to receive, from the client device, first processed encrypted data representing an encrypted outcome of the function on the first set of data. The instructions are further operative, if the first set of data is not encrypted, to perform the first function on the first set of data to generate first processed data.

### BRIEF DESCRIPTION OF THE DRAWINGS

FIG. 1 illustrates an exemplary wireless transmit/receive unit (WTRU) that may be employed as a user device, application server, notification server and/or other network node in embodiments described herein.
FIG. 2 illustrates an exemplary network entity that may be employed as a user device, cloud server, and/or other network node in embodiments described herein.
FIG. 3 is a flow diagram illustrating a method of delegating processing of sensitive data.
FIG. 4 is a flow diagram illustrating a method of delegating processing of sensitive data employed to conduct image processing.

### DETAILED DESCRIPTION

In the systems and methods of the present disclosure, sensitive parts of data processing are delegated to users' personal devices. Different approaches are discussed.

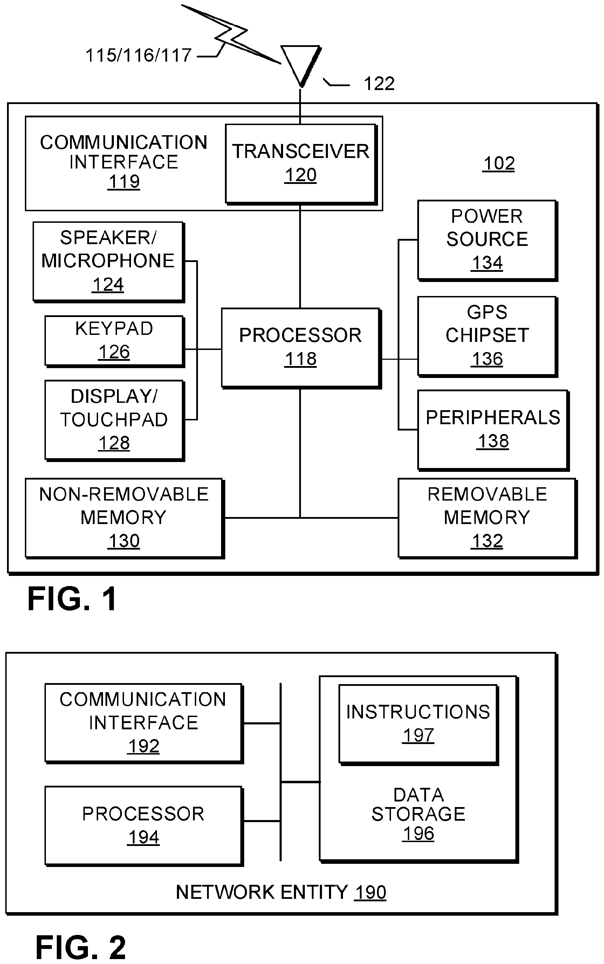

Exemplary embodiments disclosed herein are implemented using one or more wired and/or wireless network nodes, such as a wireless transmit/receive unit (WTRU) or other network entity. FIG. 1 is a system diagram of an exemplary WTRU 102, which may be employed as a user device in embodiments described herein. As shown in FIG. 1, the WTRU 102 may include a processor 118, a communication interface 119 including a transceiver 120, a transmit/receive element 122, a speaker/microphone 124, a keypad 126, a display/touchpad 128, a non-removable memory 130, a removable memory 132, a power source 134, a global positioning system (GPS) chipset 136, and sensors 138. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1 depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station over the air interface 115/116/117. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, as examples. In yet another embodiment, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in FIG. 1 as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 115/116/117.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, as examples.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. As examples, the power source 134 may include one or more dry cell batteries (e.g., nickel-cadmium (NiCd), nickel-zinc (NiZn), nickel metal hydride (NiMH), lithium-ion (Li-ion), and the like), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 115/116/117 from a base station and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include sensors such as an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

FIG. 2 depicts an exemplary network entity 190 that may be used in embodiments of the present disclosure, for example as a server in a cloud service. As depicted in FIG. 2, network entity 190 includes a communication interface 192, a processor 194, and non-transitory data storage 196, all of which are communicatively linked by a bus, network, or other communication path 198.

Communication interface 192 may include one or more wired communication interfaces and/or one or more wireless-communication interfaces. With respect to wired communication, communication interface 192 may include one or more interfaces such as Ethernet interfaces, as an example. With respect to wireless communication, communication interface 192 may include components such as one or more antennae, one or more transceivers/chipsets designed and configured for one or more types of wireless (e.g., LTE) communication, and/or any other components deemed suitable by those of skill in the relevant art. And further with respect to wireless communication, communication interface 192 may be equipped at a scale and with a configuration appropriate for acting on the network side-as opposed to the client side-of wireless communications (e.g., LTE communications, Wi-Fi communications, and the like). Thus, communication interface 192 may include the appropriate equipment and circuitry (perhaps including multiple transceivers) for serving multiple mobile stations, UEs, or other access terminals in a coverage area.

Processor 194 may include one or more processors of any type deemed suitable by those of skill in the relevant art, some examples including a general-purpose microprocessor and a dedicated DSP.

Data storage 196 may take the form of any non-transitory computer-readable medium or combination of such media, some examples including flash memory, read-only memory (ROM), and random-access memory (RAM) to name but a few, as any one or more types of non-transitory data storage deemed suitable by those of skill in the relevant art could be used. As depicted in FIG. 2, data storage 196 contains program instructions 197 executable by processor 194 for carrying out various combinations of the various network-entity functions described herein.

The present disclosure describes systems and methods of protecting data stored in a cloud service. Instead of (or in addition to) ensuring that the cloud infrastructure is trusted, a different approach is described. In exemplary embodiments, sensitive data processing is performed using user's personal devices instead of cloud servers, and the cloud infrastructure contains mechanisms that allow such a delegation. Cloud servers are used as storage for encrypted personal data. Processing of unencrypted data is performed in trusted premises, making many attack scenarios irrelevant as sensitive data is never decrypted in non-trusted premises. Embodiments disclosed herein operate to maintain privacy while still allowing processing of sensitive personal data.

Some embodiments are based on the use of a remote procedure call (RPC). This approach requires partitioning of the problem so that encrypted sensitive data stored on a non-trusted system is passed to a trusted system for processing, and encrypted results are returned to the non-trusted system after processing.

Some embodiments are based on a remote process. Programs are deployed that are used to process encrypted data on a user's device. This has an advantage that there is no need to partition algorithms. However, this requires programs to be categorized to two categories.

Some embodiments are based on a remote operating system (OS). A whole OS instance is run in the user's device using a virtualization mechanism. Users requiring privacy sensitivity deploy a whole cloud environment to their devices and use the cloud only as data source.

All three approaches are possible and feasibility depends on application domain. There is also another trust dependency. Cloud software providers provide proprietary services that contain confidential algorithms. Exposing those to client's devices would mean that the algorithms can be reverse engineered and copied by competitors. As data processing includes running software of the cloud provider it is still possible that user's personal data is leaked by a malicious cloud provider. However, performing computations at the user's premises mitigates hardware-based attacks that are very difficult to detect even if attestation-based techniques are used. Many hardware-based attacks belong to a category "user-as-an-attacker," and as here the user owns the computing infrastructure, the motivation for these attacks is very low.

### Remote Procedure Call.

In an exemplary embodiment, individual personal data values that are stored in a personal cloud are tagged to be either sensitive or non-sensitive. Sensitive parts are stored in encrypted form. Whenever data processing accesses these sensitive data fields, execution is moved to the user's local system. Processing of non-sensitive data can be performed in the cloud environment. The decryption key for encrypted sensitive material is only available in user's local system.

In some implementations, all data is stored in a database, and all data items have a sensitivity value field. If there are only two sensitivity levels, the value can be a binary flag value. Note that the cloud provider may still able to access metadata information, although the data itself is encrypted. The provider can monitor names of data fields like 'salary', 'illness', 'crime record,' but the content itself is encrypted. In some embodiments, there is a function that is used to verify sensitivity of data. The client system employs a set of Remote Procedure Calls that are used to process data. The following Python fragment demonstrates an exemplary program flow scenario:

```
 field1 = get_field(index1)
 field2 = get_field(index2)
 if sensitive(field1) or sensitive(field2):
       ret = rpc_functionA(field1, field2, Personal)
 else:
       ret = functionA(field1, field2)
```

As all data fields in the example contain sensitivity tags, processing of sensitive data is forwarded to a user's personal device if one of the fields to be used as a parameter is detected to be a sensitive field.

In the exemplary code above, non-sensitive data processing uses code implemented as a subroutine in the cloud program (functionA) whereas processing of sensitive data is delegated to the user's system by calling a remote procedure call client stub function (rpcfunctionA). The function can also have a parameter to specify where data should be processed (Personal). The user's local device is provided with an RPC listener component and executable code to implement each specified RPC call. The RPC call passes sensitivity information to the remote system. The RPC function call can have both encrypted and plain text parameters in the same function call. Because sensitivity information is passed along with the variable, the implementation function is able to decrypt parameters as needed.

In some implementations using a remote procedure call, in response to a determination to perform a function at the user's device, a cloud server performs a call to a stub function, with parameters pushed on to the stack. The stub marshals the parameters into a message and makes a system call to send the message. The operating system of the cloud server sends the message from the cloud server to the user's device.

The user's operating system passes the incoming packets to a stub function. The stub function unpacks (unmarshals) the parameters from the message. The stub function on the client machine calls the required local function. The reply to the cloud traces the same steps in the reverse direction.

In some embodiments, network communications between the cloud and personal devices are also protected. For example, communications can be tunneled using Transport Layer Security (TLS) or an IPSEC-based virtual private network (VPN).

### Remote Process.

In some embodiments, instead of partitioning data processing inside a process, a whole process is moved to the user's premises. If there is a cloud-based database with encrypted content, then a process running in the user's premises accesses encrypted storage and downloads content. The content is decrypted in user's device and processed there. Non-sensitive data processing is still done as a cloud service.

For example, a piece of software may be provided to the user device by a cloud server. The software may then be run in a trusted computing environment that is instantiated on the user device. As such, the cloud server provides computer code with the encrypted data to the user device in response to a request to act upon encrypted data in the cloud. The user device executes the code such as to instantiate a piece of software in a trusted computing environment, decrypts the content at the user device and runs the software on the decrypted content. The user device re-encrypts the content and communicates the processed and re-encrypted content back to the cloud server. In some embodiments, the computer code may comprise a portion of a piece of software available at the cloud (e.g., a single operation of a larger program, such as a specific photo filter without a user interface, etc.).

As compared to the RPC embodiment, there is no preexisting local function to perform the requested process at the user's device, so the computer code for such a function is communicated to the user's device.

### Remote Operating System.

A remote process running in user's device can also be privacy threat as it can also monitor the user's environment. In order to mitigate these threats, local processing can be done using a virtualized environment. The solution can be based on either on full virtualization or something more lightweight like namespace-based partitioning as in the Docker system.

### Exemplary Service.

In an exemplary embodiment, a photo manipulation cloud service is provided. For example, a photo manipulation cloud service can be used to add various effects such as filters to personal images. Images are stored in encrypted form, but users are provided with the ability to process the images. An exemplary service provides set of filters from which the user can choose.

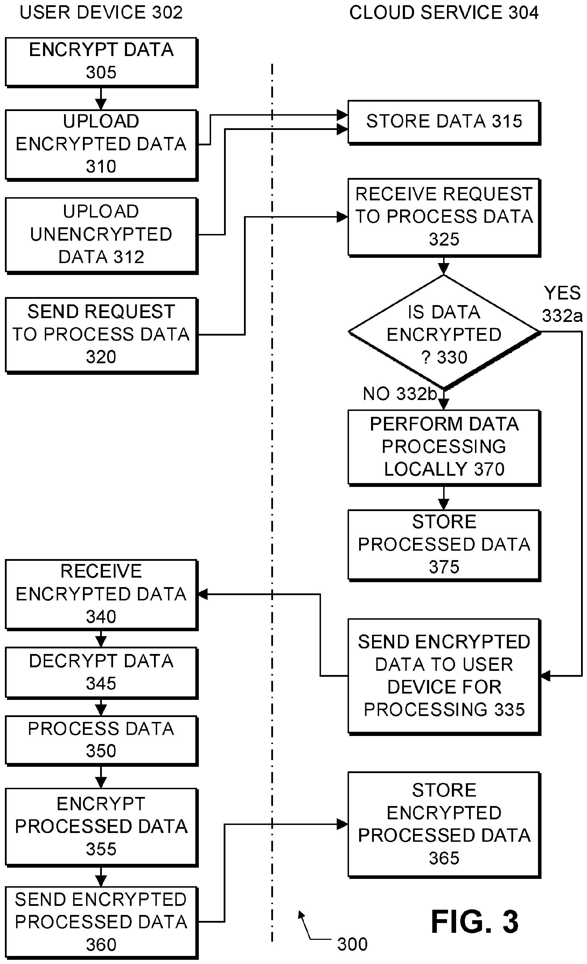

In an exemplary method 300 illustrated in FIG. 3, a user device 302 encrypts data (305) and uploads the encrypted data (310) to a cloud service 304 for storage (315). The cloud service may comprise one or more servers. The user may also upload unencrypted data (312) for storage (315) by the cloud service. The user device may send to the cloud service a request to process selected data (320). The cloud service receives the request to process selected data (325), and determines whether the selected data is encrypted (330). (Note that in this exemplary embodiment, data is considered encrypted if the cloud service is not provided with a corresponding decryption key. For example, data for which the cloud service has the decryption key is not considered to be encrypted in this example.)

If the data to be processed is encrypted (332a), then the data is sent in its encrypted form to the user device for decryption and processing (335), along with instructions on how to process the data. The instructions on how to process the data may be provided in various forms. For example, the instructions may be provided as part of a remote procedure call, or the cloud service may convey computer code for performing the data processing to the user device (e.g., an executable piece of software to perform the requested processing on the data, such as a photo editing filter, etc.). The user device receives the encrypted data (340), decrypts the data (345), and processes the data according to the received instructions (350). In some embodiments, processing the data may further comprise executing computer code to instantiate software at the user device to perform the process on the data. The user device then re-encrypts the resulting processed data (355) and sends the encrypted processed data (360) back to the cloud service for storage (365). In some embodiments, the computer code may be removed from the user's device after data processing and/or after uploading the re-encrypted processed data to the cloud.

In some embodiments in which the cloud service conveys to the user device the computer code used to perform the data processing, steps may be taken to protect the computer code from copying and/or reverse engineering. For example, the computer code may be sent to the user device in an encrypted form, which the computer code being decrypted and executed in an isolated execution environment such as the ARM TrustZone. Trusted computing technologies such as remote attestation, sealed storage, and/or memory curtaining are employed in some embodiments to protect the intellectual property of the cloud service. In some embodiments, the cloud service may request attestation from the user device using a remote attestation protocol, such as direct anonymous attestation, and may send the computer code to the user device only after receiving a satisfactory response from the user device.

If the data to be processed is not encrypted (332b), the data is processed by the cloud service (370), which then stores the processed data (375). In some embodiments, the processed data may also be conveyed to the client device. In some embodiments, the processed data is conveyed to the client device only in a partial or low-resolution form. For example, a large image file may be processed by the cloud service (e.g., to apply a filter or to perform facial recognition), with the full-resolution processed image being stored by the cloud service and a lower resolution version of the processed image being provided to the user device, allowing the user to confirm that the processing was performed correctly without requiring the user to download the full-resolution version of the image.

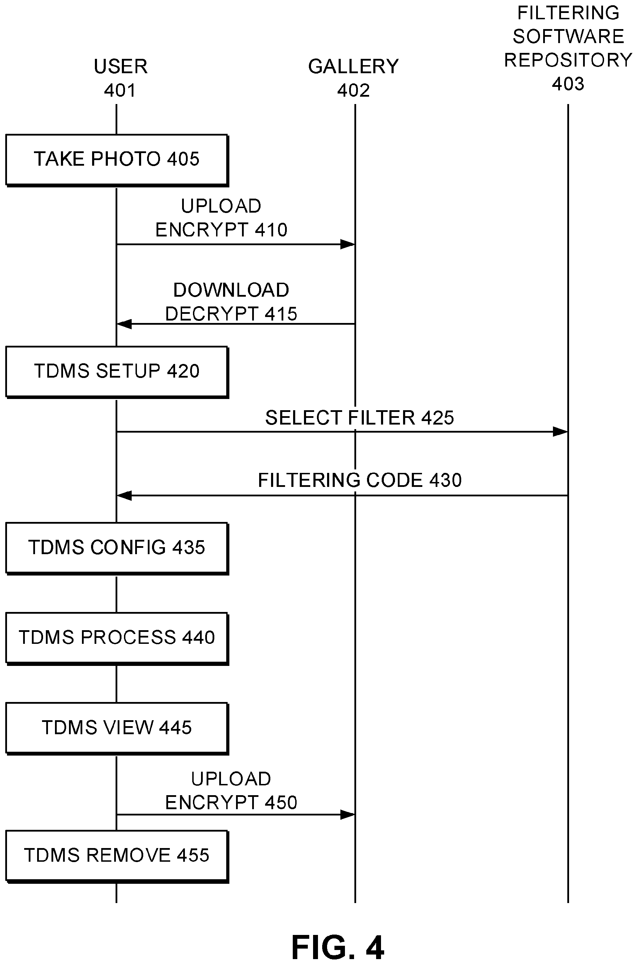

In an exemplary method illustrated in FIG. 4, a user 401 takes or otherwise obtains one or more photographs (405). The photographs are encrypted and stored (e.g., uploaded) in a personal encrypted data cloud (410). Each new photograph is transparently encrypted and uploaded to the encrypted cloud photo gallery 402. The user is provided with viewer software that transparently decrypts gallery images and displays those images to the user (415).

A trusted computing environment, such as a trusted data mining sandbox (TDMS), is instantiated on the user device (420). The user selects an image filtering service (404) that can be used to manipulate images (425). The selected manipulation filter is installed into the trusted computing environment (430). The user configures and adjusts filter parameters (435, 440). The filtered image is shown to the user (445). The filtered image is transparently encrypted and uploaded to encrypted personal cloud gallery (450). The trusted computing environment is then uninstalled (455).

In some embodiments, the system may communicate encrypted data to the user device along with one or more parameters to an existing software on the user device which handles the processing of incoming data packets. In some embodiments, the system may communicate encrypted data to the user device along with a descriptor (such as a MIME type) associated with the data, launching the appropriate process. In some embodiments, the system may communicate encrypted data to the user device along with a piece of scripting language code (having a minimum of one line). In these cases, the user device may have a trusted run time environment which is able to process the encrypted data accordingly.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
receiving (325) from a client device a request to perform a first operation, wherein the first operation includes at least a first function performed on a first set of data;
determining (330) whether the first set of data is encrypted;
if the first set of data is encrypted:
sending (335), to the client device, the first set of data and an instruction to perform the first function, wherein the instruction includes computer code for performing the first function; and
receiving (360), from the client device, first processed encrypted data representing an encrypted outcome of the function on the first set of data; and
if the first set of data is not encrypted:
performing (370) the first function on the first set of data to generate first processed data.

2. The method of claim 1, wherein the computer code is sent to the client device in an encrypted form.

3. The method of any one of the preceding claims, further comprising requesting remote attestation of the client device, wherein the computer code is sent to the client device only after receiving satisfactory attestation of the client device.

4. The method of any one of the preceding claims, further comprising storing the first processed encrypted data.

5. The method of any one of the preceding claims, wherein determining whether the first set of data is encrypted includes determining whether the first set of data is marked as being sensitive.

6. The method of any one of the preceding claims, further comprising sending the first processed data to the client device.

7. The method of any one of the preceding claims, performed by a cloud service including at least one server.

8. The method of any one of the preceding claims, wherein the computer code comprises executable computer code.

9. A cloud service comprising at least one server (190) having a processor (194) and a non-transitory data storage medium, the medium (196) storing instructions (197) that are operative, when executed by the processor:
to receive (325) from a client device a request to perform a first operation, wherein the first operation includes at least a first function performed on a first set of data;
to determine (330) whether the first set of data is encrypted;
the instructions being operative, if the first set of data is encrypted:
to send (335), to the client device, the first set of data and an instruction to perform the first function, wherein the instruction to perform the first function includes computer code for performing the first function; and
to receive (360), from the client device, first processed encrypted data representing an encrypted outcome of the function on the first set of data;
the instructions being operative, if the first set of data is not encrypted, to perform (370) the first function on the first set of data to generate first processed data.

10. The cloud service of claim 9, wherein the cloud service includes instructions operative to send the computer code to the client device in an encrypted form.

11. The cloud service of claim 9 or 10, further comprising instructions operative to request remote attestation of the client device, wherein the computer code is sent to the client device only after receiving satisfactory attestation of the client device.

12. The cloud service of any one of claims 9 through 11, wherein the instructions are further operative to store the first processed encrypted data.

13. The cloud service of any one of claims 9 through 12, wherein the determination of whether the first set of data is encrypted is performed using instructions operative to determine whether the first set of data is marked as being sensitive.

## Patentansprüche

1. Verfahren, umfassend:
Empfang (325) einer Anfrage von einer Clientvorrichtung zur Ausführung einer ersten Operation, wobei die erste Operation mindestens eine erste Funktion umfasst, die auf einem ersten Datensatz ausgeführt wird;
Bestimmung (330), ob der erste Satz Daten verschlüsselt ist;
wenn der erste Satz Daten verschlüsselt ist:
Senden (335) des ersten Satzes Daten und einer Anweisung zur Durchführung der ersten Funktion an die Clientvorrichtung, wobei die Anweisung Computercode enthält, um die erste Funktion auszuführen; und
Empfang (360) erster verarbeiteter verschlüsselter Daten, die ein verschlüsseltes Ergebnis der Funktion des ersten Datensatzes enthalten, von der Clientvorrichtung; und
wenn der erste Satz Daten nicht verschlüsselt ist:
Durchführung (370) der ersten Funktion auf dem ersten Satz Daten zum Erzeugen erster verarbeiteter Daten.

2. Verfahren nach Anspruch 1, wobei der Computercode in verschlüsselter Form an die Clientvorrichtung geschickt wird.

3. Verfahren nach einem der vorhergehenden Ansprüche, ferner umfassend die Anfrage der externen Attestierung der Clientvorrichtung, wobei der Computercode erst nach Empfang einer zufriedenstellenden Attestierung der Clientvorrichtung an die Clientvorrichtung geschickt wird.

4. Verfahren nach einem der vorhergehenden Ansprüche, ferner umfassend das Speichern der ersten verarbeiteten verschlüsselten Daten.

5. Verfahren nach einem der vorhergehenden Ansprüche, wobei die Bestimmung, ob der erste Satz Daten verschlüsselt ist, die Bestimmung enthält, ob der erste Satz Daten als empfindlich markiert ist.

6. Verfahren nach einem der vorhergehenden Ansprüche, ferner umfassend das Senden der ersten verarbeiteten Daten an die Clientvorrichtung.

7. Verfahren nach einem der vorhergehenden Ansprüche, durchgeführt durch einen Cloud-Dienst, der mindestens einen Server enthält.

8. Verfahren nach einem der vorhergehenden Ansprüche, wobei der Computercode ausführbaren Computercode enthält.

9. Ein Cloud-Dienst, der mindestens einen Server enthält (190), der einen Prozessor (194) und ein nichttransitorisches Speichermedium aufweist, wobei das Medium (196) Anweisungen (197) speichert, die operativ sind, wenn sie durch den Prozessor ausgeführt werden:
zum Empfang (325) einer Anfrage von einer Clientvorrichtung zur Ausführung einer ersten Operation, wobei die erste Operation mindestens eine erste Funktion umfasst, die auf einem ersten Datensatz ausgeführt wird;
zur Bestimmung (330), ob der erste Satz Daten verschlüsselt ist;
wobei die Anweisungen operativ sind, wenn der erste Satz Daten verschlüsselt ist:
zum Senden (335) des ersten Satzes Daten an die Clientvorrichtung und einer Anweisung zur Durchführung der ersten Funktion, wobei die Anweisung zum Durchführen der ersten Funktion Computercode enthält, um die erste Funktion auszuführen; und
zum Empfang (360) erster verarbeiteter verschlüsselter Daten von der Clientvorrichtung, die ein verschlüsseltes Ergebnis der Funktion des ersten Datensatzes enthalten;
wobei die Anweisungen operativ sind, wenn der erste Satz Daten nicht verschlüsselt ist, zur Ausführung (370) der ersten Funktion des ersten Satzes Daten zum Erzeugen der ersten verarbeiteten Daten.

10. Der Cloud-Dienst von Anspruch 9, wobei der Cloud-Dienst Anweisungen enthält, die operativ sind, um den Computercode in verschlüsselter Form an die Clientvorrichtung zu senden.

11. Cloud-Dienst nach Anspruch 9 oder 10, ferner umfassend Anweisungen, die operativ sind für die Anfrage einer externen Attestierung der Clientvorrichtung, wobei der Computercode erst nach Empfang einer zufriedenstellenden Attestierung der Clientvorrichtung an die Clientvorrichtung geschickt wird.

12. Cloud-Dienst nach einem der Ansprüche 9 bis 11, wobei die Anweisungen ferner operativ sind, die ersten verarbeiteten verschlüsselten Daten zu speichern.

13. Cloud-Dienst nach einem der Ansprüche 9 bis 12, wobei die Bestimmung, ob der erste Satz Daten verschlüsselt ist, unter Verwendung von Anweisungen durchgeführt wird, die operativ sind, um zu bestimmen, ob der erste Satz Daten als empfindlich markiert ist.

## Revendications

1. Procédé comprenant de :
recevoir (325) depuis un dispositif client une demande pour effectuer une première opération, dans lequel la première opération inclut au moins une première fonction exécutée sur un premier ensemble de données ;
déterminer (330) si le premier ensemble de données est crypté ;
si le premier ensemble de données est crypté :
envoyer (335), au dispositif client, le premier ensemble de données et une instruction pour exécuter la première fonction, dans lequel l'instruction inclut un code informatique pour exécuter la première fonction ; et
recevoir (360), depuis le dispositif client, des premières données cryptées traitées représentant un résultat crypté de la fonction sur le premier ensemble de données ; et
si le première ensemble de données n'est pas crypté :
exécuter (370) la première fonction sur le premier ensemble de données pour générer des premières données traitées.

2. Procédé selon la revendication 1, dans lequel le code informatique est envoyé au dispositif client sous une forme cryptée.

3. Procédé selon une quelconque des revendications précédentes, comprenant en outre de demander une attestation distante du dispositif client, dans lequel le code informatique est envoyé au dispositif client seulement après la réception d'une attestation satisfaisante du dispositif client.

4. Procédé selon une quelconque des revendications précédentes, comprenant en outre de mémoriser les premières données cryptées traitées.

5. Procédé selon une quelconque des revendications précédentes, dans lequel déterminer que le premier ensemble de données est crypté inclut de déterminer que le premier ensemble de données est marqué comme étant sensible.

6. Procédé selon une quelconque des revendications précédentes, comprenant en outre d'envoyer les premières données traitées au dispositif client.

7. Procédé selon une quelconque des revendications précédentes, exécuté par un service de nuage incluant au moins un serveur.

8. Procédé selon une quelconque des revendications précédentes, dans lequel le code informatique comprend un code informatique exécutable.

9. Service de nuage comprenant au moins un serveur (190) ayant un processeur (194) et un support de mémorisation de données non transitoire, le support (196) mémorisant des instructions (197), qui sont opérationnelles, lorsqu'elles sont exécutées par le processeur, pour :
recevoir (325) depuis un dispositif client une demande pour effectuer une première opération, dans lequel la première opération inclut au moins une première fonction exécutée sur un premier ensemble de données ;
déterminer (330) si le premier ensemble de données est crypté ;
si le premier ensemble de données est crypté :
envoyer (335), au dispositif client, le premier ensemble de données et une instruction pour exécuter la première dans lequel l'instruction inclut un code informatique pour exécuter la première fonction ; et
recevoir (360), depuis le dispositif client, des premières données cryptées traitées représentant un résultat crypté de la fonction sur le premier ensemble de données ;
les instructions étant opérationnelle, si le premier ensemble de données n'est pas crypté, pour exécuter (370) la première fonction sur le premier ensemble de données afin de générer des premières données traitées.

10. Service de nuage selon la revendication 9, dans lequel le service de nuage inclut des instructions opérationnelles pour envoyer le code informatique au dispositif client sous une forme cryptée.

11. Service de nuage selon la revendication 9 ou 10, comprenant en outre des instructions opérationnelles pour demander une attestation à distance du dispositif client, dans lequel le code informatique est envoyé au dispositif client seulement après la réception d'une attestation satisfaisante du dispositif client.

12. Service de nuage selon une quelconque des revendications 9 à 11, dans lequel les instructions sont en outre opérationnelles pour mémoriser le premier ensemble de données cryptées traitées.

13. Service de nuage selon une quelconque des revendications 9 à 12, dans lequel déterminer que le premier ensemble de données est crypté inclut de déterminer que le premier ensemble de données est marqué comme étant sensible.
